# FASCICULE DE BREVET EUROPEEN

(11) **EP 2 267 331 B1**
(45) Date de publication et mention de la délivrance du brevet: **11.06.2014**
(21) Numéro de dépôt: 10164383.1
(22) Date de dépôt: 28.05.2010
(51) Int. Cl.: B60R 19/02, B60R 19/16, F16F 3/087

(54) **Butoir amortisseur de chocs pour la protection d'un premier élément lors de sa rencontre avec un deuxième élément**
Stoßdämpfer-Puffer zum Schutz eines Elements beim Zusammentreffen mit einem anderen Element
Shock-absorbing stopper for protecting a first element when it meets a second element

(30) Priorité: 05.06.2009 FR 0902714
(43) Date de publication de la demande: 29.12.2010
(73) Titulaire: Pommier, 95310 Saint Ouen l'Aumone (FR)
(72) Inventeur: Reus, Pierre, 85200 Fontenay-le-Comte (FR)
(74) Mandataire: Thinat, Michel

(56) Documents cités:
- EP-A- 1 977 934
- FR-A- 723 437
- FR-A- 2 841 883
- US-A1- 2007 152 390

## Description

La présente invention concerne un butoir amortisseur de chocs pour la protection d'un premier élément, tel qu'un véhicule, lors de sa rencontre avec un deuxième élément, tel qu'un quai, avec lequel ledit premier élément à protéger est animé d'un déplacement relatif.

Elle concerne plus particulièrement un butoir comprenant au moins un support apte à être fixé au premier élément à protéger et un patin d'interposition entre support et deuxième élément, ledit support étant réalisé au moins partiellement en un matériau élastiquement déformable pour amortir les chocs subis par la surface dite active du patin, en particulier lors de sa rencontre avec le deuxième élément.

De plus en plus fréquemment, les véhicules, en particulier les camions et/ou les quais, sont équipés de butoirs qui amortissent les chocs lors de l'accostage du camion à quai en vue de son chargement ou de son déchargement.

Généralement, de tels butoirs sont des butoirs à butée tournante, la surface active du butoir destinée à recevoir les chocs étant formée par un rouleau, comme l'illustre par exemple le brevet US-5.004.394. L'inconvénient de tels butoirs à butée tournante réside dans les faibles dimensions de la surface de réception des chocs formée généralement par une ligne du rouleau. Il en résulte un endommagement rapide du butoir.

Un but de la présente invention est donc de proposer un butoir dont la surface active de réception des chocs est augmentée sans nuire à la résistance mécanique du reste du butoir, en particulier à la liaison patin/support.

A cet effet, l'invention a pour objet un butoir amortisseur de chocs pour la protection d'un premier élément, tel qu'un véhicule, lors de sa rencontre avec un deuxième élément, tel qu'un quai, avec lequel ledit premier élément à protéger est animé d'un déplacement relatif, ledit butoir comprenant au moins un support apte à être fixé au premier élément à protéger et un patin d'interposition entre support et deuxième élément, ledit support étant réalisé au moins partiellement en un matériau élastiquement déformable pour amortir les chocs subis par la surface dite active du patin, en particulier lors de sa rencontre avec le deuxième élément, caractérisé en ce que le patin est un patin de type plaque dont la surface active de réception des chocs est formée par l'une des faces de ladite plaque, ce patin présentant au moins deux zones raccordées chacune au support par un axe de liaison, lesdits axes de liaison étant disposés pour s'étendre transversalement à la direction D de déplacement de la plaque de patin lorsque ladite plaque de patin est soumise à un choc frontal.

La réalisation du patin, essentiellement sous forme d'une plaque, permet d'accroître la surface de réception des chocs et de répartir les chocs sur ladite surface. La liaison du patin au support par l'intermédiaire d'au moins deux axes de liaison qui, du fait de leur orientation, se déplacent généralement parallèlement à eux-mêmes lors d'un choc frontal garantit la résistance mécanique et la tenue dans le temps de ladite liaison. En effet, lesdits axes de liaison s'étendent transversalement à la direction générale de déplacement de la plaque de patin lorsque ladite plaque, soumise à un choc frontal, est pressée en direction du support. En d'autres termes, les axes de liaison s'étendent sensiblement transversalement à la direction de la force d'appui exercée sur la plaque de patin lorsque la plaque de patin est pressée en direction du support, en particulier à l'état fixé du support au premier élément à protéger.

Par ailleurs, l'utilisation d'au moins deux axes de liaison permet de multiplier les points de liaison entre support et patin de sorte que l'endommagement d'une liaison est insuffisant pour entraîner un désassemblage du patin du support. Enfin, la liaison par axe permet un montage et un démontage aisés du patin du support.

De préférence, la plaque de patin est une plaque allongée de type lame et les axes de liaison du patin au support sont des axes, parallèles entre eux, décalés axialement le long de la plaque de patin et s'étendant sensiblement orthogonalement à l'axe longitudinal de ladite plaque.

II est ainsi aisé de faire varier le nombre d'axes de liaison entre patin et support en fonction, en particulier, des dimensions du support et de la plaque.

Par ailleurs, les axes de liaison se déplacent essentiellement parallèlement à eux-mêmes lors d'un choc frontal exercé sur la plaque de patin de sorte que leur sollicitation est réduite. Il doit être rappelé que, lors d'un choc frontal, la force d'appui qui s'exerce sur la surface active du patin doit être considérée comme une force présentant une composante principale normale à ladite surface ou à la tangente à ladite surface au point d'impact du choc.

Parallèlement, le support, en particulier le matériau élastiquement déformable constitutif d'au moins une partie du support, travaille essentiellement en compression de sorte que son usure est réduite.

De préférence, le support est muni d'au moins une butée de fin de course du patin, ladite butée limitant, dans un sens, le déplacement dit axial du patin suivant une direction parallèle à l'axe longitudinal de la plaque de patin de manière à permettre, lors d'un positionnement vertical de la plaque sur le premier élément à protéger, une limitation en déplacement du patin suivant un mouvement ascendant.

La présence d'au moins une butée de fin de course permet de limiter la sollicitation, en particulier à l'arrachement, des parties élastiquement déformables du support.

L'invention sera bien comprise à la lecture de la description suivante d'exemples de réalisation, en référence aux dessins annexés dans lesquels :
la figure 1 représente une vue de côté partiellement en transparence d'un butoir conforme à l'invention:
la figure 2 représente une vue en perspective d'un butoir en position éclatée des éléments le constituant et
la figure 3 représente une vue de côté d'un butoir conforme à l'invention dans laquelle le patin du butoir est représenté, en trait plein, en position non déformée du support et, en pointillé, après déformation du support résultant d'un choc frontal exerçant une force d'appui et de poussée sur la surface active de la plaque de patin.

Comme mentionné ci-dessus, le butoir amortisseur de chocs, objet de l'invention, est destiné à être fixé à un premier élément à protéger pour permettre la protection de ce premier élément 20, lors de sa rencontre avec un deuxième élément 21, tel qu'un quai, avec lequel ledit premier élément 20 à protéger est animé d'un déplacement relatif. Ces premier et deuxième éléments peuvent indifféremment être formés l'un, par un véhicule, tel qu'un camion, l'autre, par un quai ou autre. Le butoir peut ainsi indifféremment être fixé à l'arrière du véhicule ou au quai en fonction de l'élément 20 à protéger choisi.

Ce butoir comprend au moins un support 2, apte à être fixé au premier élément 20 à protéger, et un patin 8 d'interposition entre support 2 et deuxième élément 21. Le patin 8 est un patin de type plaque 9 dont la surface active de réception des chocs est formée par l'une des faces de ladite plaque 9. Cette face active de la plaque de patin est représentée en 10A aux figures. Ce patin 8, formé au moins d'une plaque 9, présente en outre au moins deux zones 12 raccordées chacune au support 2 par un axe 15 de liaison. Ces axes 15 de liaison s'étendent transversalement à la direction D de déplacement de la plaque 9 de patin lorsque ladite plaque 9 de patin, soumise à un choc, par exemple frontal, est pressée en direction du support 2. Le pressage de la plaque en direction du support tend à rapprocher la plaque de la base du support, c'est-à-dire de la zone de fixation du support à l'élément à protéger.

Dans les exemples représentés, la surface active de la plaque sollicitée lors d'un choc frontal étant une surface essentiellement plane, les axes 15 de liaison s'étendent de préférence sensiblement parallèlement à ladite face active de la plaque à l'état non déformé du support 2. Lorsque la face active de la plaque sollicitée lors d'un choc frontal est courbe, ladite plaque de patin se présentant par exemple sous forme d'une lame cintrée, les axes 15 de liaison s'étendent à nouveau sensiblement parallèlement à la face active courbe de la plaque de patin à l'état non déformé du support.

Dans les exemples représentés, les axes 15 de liaison s'étendent sensiblement perpendiculairement à la direction D de déplacement de la plaque 9 de patin lorsque ladite plaque de patin, soumise à un choc frontal, est pressée en direction du support. Cette disposition permet aux axes 15 de liaison de se déplacer sensiblement parallèlement à eux-mêmes lors d'un choc frontal qui est le cas le plus fréquemment rencontré. Ainsi, la sollicitation des axes 15 de liaison est réduite.

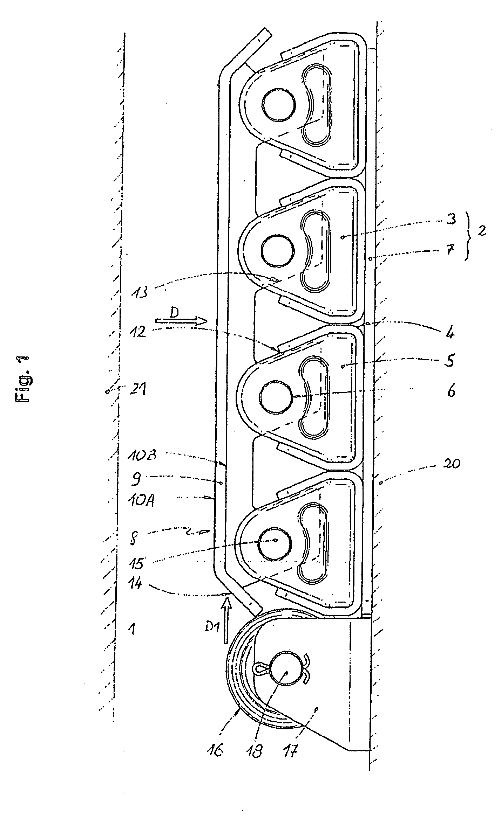

De préférence et comme l'illustrent les figures, la plaque 9 de patin est une plaque allongée de type lame et les axes 15 de liaison du patin 8 au support 2 sont des axes, parallèles entre eux s'étendant sensiblement orthogonalement à l'axe longitudinal de ladite plaque et décalés axialement le long de la plaque 9 de patin. Le support 2 est muni d'au moins une butée 19 de fin de course du patin 8, ladite butée 19 limitant, dans un sens, le déplacement dit axial du patin suivant une direction parallèle à l'axe longitudinal de la plaque de patin de manière à permettre, lors d'un positionnement vertical de la plaque sur le premier élément 20 à protéger, comme l'illustre la figure 1, une limitation en déplacement du patin 8 suivant un mouvement ascendant.

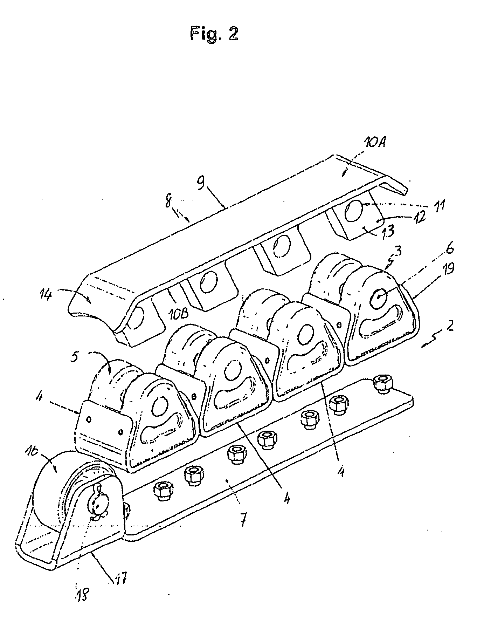

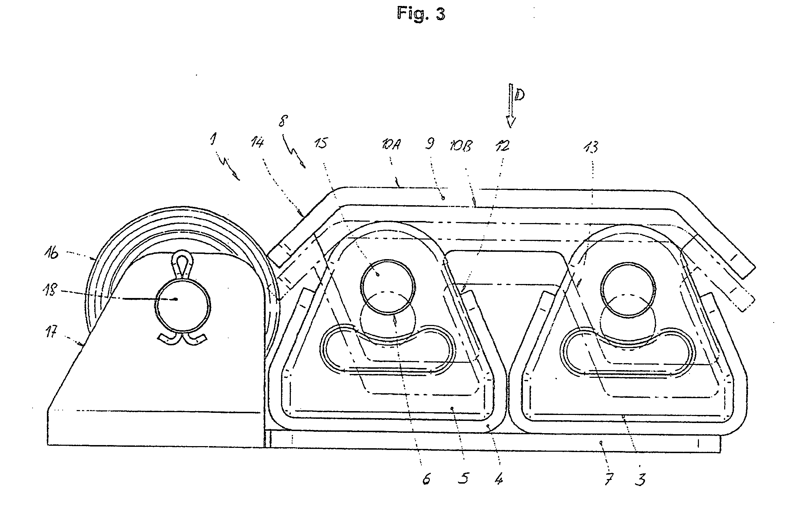

Dans les exemples représentés, le support 2 formant paliers d'axes comprend au moins deux paliers 3, de préférence au moins partiellement élastiquement déformables, servant chacun à la réception d'un axe 15 de liaison du patin 8 au support 2 et une base 7 portant lesdits paliers 3, les paliers 3 étant montés de préférence amovibles sur la base 7. Il doit être noté que la réalisation en un matériau élastiquement déformable d'au moins une partie des paliers du support est préférée à la solution qui consisterait à réaliser la base au moins partiellement en un matériau élastiquement déformable. La base affecte ici la forme d'une platine de type lame s'étendant, à l'état non déformé desdits paliers 3, sensiblement parallèlement à la partie de la face active de la plaque 9 de patin sollicitée lors d'un choc frontal. Ainsi, lors d'un choc frontal, la plaque 9 de patin tend à se rapprocher de ladite base 7 du support. Cette platine, constitutive de la base du support, est munie de moyens de fixation par vissage des paliers 3 à la base. Cette simplicité de fixation permet un montage et un démontage aisés desdits paliers, par exemple pour un remplacement de ces derniers. Par ailleurs, du fait du montage amovible des paliers 3 sur la base 7, il est aisé de modifier le nombre de paliers en fonction de la résistance mécanique souhaitée. On peut ainsi disposer d'un butoir comportant un jeu de patins et un jeu de base de différentes dimensions, le nombre de paliers étant fonction du couple patin-base retenu. Ainsi, comme l'illustrent les figures 2 et 3, il suffit de modifier la longueur des plaques du patin et de la base et d'accroître le nombre de paliers pour obtenir un butoir adapté aux dimensions de l'élément 20 à protéger. On note également qu'ici les organes de fixation par vissage des paliers à la base servent en outre d'organes de fixation de la base à l'élément 20 à protéger. A nouveau, cette fixation s'opère par vissage. La vis de fixation du palier 3 du support à la base traverse le palier 3 puis la base du support avant d'être vissée dans l'élément 20 à protéger. La figure 2 illustre un butoir à 4 paliers tandis que la figure 3 illustre un butoir à deux paliers.

Dans les exemples représentés, chaque zone 12 de raccordement du patin 8 au support 2 est formée par une partie 12 en saillie de la face 10B de la plaque 9 de patin, dite inactive, tournée vers le support 2 et opposée à la face 10A active de la plaque, chaque partie 12 en saillie comportant au moins un passage 11 d'axe apte à loger un axe 15 de liaison. En particulier, chaque partie 12 en saillie de la face 10B inactive de la plaque 9 affecte la forme d'une dent 13 ou créneau comportant, au voisinage de son sommet, un passage 11 d'axe, la succession de dents 13 ou créneaux formant, en saillie de la face 10B inactive de la plaque 9, une nervure ou crête crénelée ou dentelée. Chaque palier 3 du support 2 comporte au moins deux joues 5 au moins partiellement élastiquement déformables, lesdites joues 5, munies chacune d'au moins un passage 6 d'axe, étant insérées à l'intérieur d'une chape 4 en U ou en C couché maintenant lesdites joues 5 parallèles entre elles pour délimiter entre lesdites joues 5 un espace libre d'insertion d'une partie 12 en saillie munie d'un passage 11 d'axe du patin 8, au moins une zone de cette partie 12 en saillie du patin étant apte à venir en contact d'appui contre un flanc de la chape 4 formant butée de retenue dudit patin lors d'un déplacement axial du patin 8 suivant une direction parallèle à l'axe longitudinal de la plaque 9 de patin.

Dans l'exemple représenté à la figure 2, la face 10B inactive ou dos de la plaque 9 de patin comporte 4 dents munies chacune d'un passage 11 d'axe formé par un orifice traversant. Chaque dent s'insère entre deux joues 5 réalisées au moins partiellement en un matériau élastiquement déformable d'un palier 3 du support de sorte que le passage 11 d'axe de la dent est positionné en regard des passages 6 d'axe formés par des orifices traversants ou borgnes ménagés dans lesdites joues. A l'intérieur des passages 11 et 6 d'axe disposés en regard est introduit l'axe 15 de liaison entre patin et support. Pour chaque axe 15 de liaison, au moins l'un des passages 6, 11 d'axe du support 2 ou du patin 8 apte à recevoir ledit axe 15 de liaison est muni d'un organe mâle, ou respectivement femelle, apte à coopérer avec un organe femelle, ou respectivement mâle, ménagé sur ledit axe 15 de liaison pour une immobilisation axiale de l'axe 15 de liaison dans lesdits passages 6, 11 d'axe. Par exemple, l'axe 15 de liaison est muni d'au moins deux gorges périphériques externes circulaires et les passages d'axe des joues chacun d'un bourrelet périphérique interne circulaire. Dans cette position de couplage du patin au support, à l'état non déformé des joues de support, l'un des flancs latéraux de la dent vient en appui contre un flanc 19 de la chape 4, ladite chape étant généralement réalisée en métal. Ce flanc 19 de la chape 4 est constitué par l'une des branches du C couché ou du U formé par ladite chape. Du fait de cet appui, lorsque la plaque de patin est disposée en position dressée, suivant une direction verticale de son axe longitudinal, à l'état fixé du butoir à l'élément 20 à protéger, tout déplacement suivant un mouvement ascendant de la plaque de patin est empêché lorsque cette plaque est, par exemple, par l'une de ses extrémités, en appui sur un obstacle et subit alors un effort axial. Dans l'exemple de la figure 1, lorsque la plaque 9 de patin est soumise, au niveau de son extrémité 14 inférieure recourbée qui sera décrite plus en détail ci-après, à un effort suivant D1, un déplacement axial de la plaque de patin suivant son axe longitudinal est empêché.

Le butoir comporte ici autant de butées de fin de course qu'il y a de paliers de support et de parties en saillie du patin. Dans les exemples représentés, les joues du palier, reliées entre elles par l'axe 15 de liaison, sont insérées par encliquetage à l'intérieur de la chape et sont maintenues en sus dans cette dernière par vissage, rivetage ou autre. Le montage par encliquetage des joues du palier à l'intérieur de la chape permet ainsi un montage et un démontage aisés des joues du palier et un remplacement rapide de ces dernières lorsque celles-ci sont endommagées du fait que ces dernières sont réalisées au moins partiellement en un matériau élastiquement déformable. Chaque joue présente ici une forme de triangle isocèle et s'insère par sa base dans ladite chape tandis que les côtés de même longueur du triangle viennent en contact d'appui contre les parties internes des flancs de la chape formés par les branches du C couché ou du U. Chaque joue est en outre munie d'une alvéole pour obtenir une déformation plus aisée de la joue.

Dans le mode de réalisation représenté aux figures, le butoir comporte, dans le prolongement de la plaque 9 de patin, une butée 16 tournante reliée audit support 2 par un axe 18 porteur, ledit support 2 formant palier 17 de l'axe 18 porteur de ladite butée 16.

La butée 16 tournante forme généralement le point bas du butoir, à l'état positionné du butoir sur l'élément 20 à protéger, la plaque de patin occupant quant à elle une disposition verticale.

Enfin, dans les exemples représentés, la plaque 9 allongée, de type lame, du patin 8, est dimensionnée pour venir à recouvrement au moins de la partie élastiquement déformable du support 2 et est recourbée à au moins une de ses extrémités en direction du support 2. Dans l'exemple représenté, la plaque 9 de patin est recourbée à chacune de ses extrémités.

La plaque de patin, généralement métallique, est utilisée pour protéger les parties élastiquement du support. La partie 14 recourbée de la plaque de patin formant le point bas de ladite plaque à l'état fixé du butoir à l'élément 20 à protéger peut former, pour le deuxième élément, lorsque ce deuxième élément vient en contact d'appui avec ladite plaque, une rampe d'accès au reste de la face active de la plaque de patin. La face active de la plaque de patin, sollicitée lors d'un choc frontal, est ici constituée par la partie plane de la plaque qui s'étend entre les parties recourbées de ladite plaque, formant les extrémités de ladite plaque.

Le fonctionnement d'un tel butoir est le suivant. Le butoir est dans un premier temps fixé à l'élément 20 à protéger, tel qu'un quai. A l'état fixé, la plaque de patin de type lame du butoir s'étend dans un plan sensiblement vertical avec son axe longitudinal positionné sensiblement verticalement. Les paliers du support forment un train de palier disposé sensiblement verticalement. La butée tournante est disposée à une extrémité de cet alignement de paliers et forme le point bas de cet alignement lorsqu'elle est présente. Lors d'un accostage du véhicule le long du quai, le véhicule tend à heurter la partie médiane de la face active de la plaque de patin s'étendant entre les extrémités recourbées de ladite plaque en forme de lame. Cette partie de la plaque correspond à la zone de la plaque sollicitée lors d'un choc frontal. Cet appui sur la surface active de la plaque est transmis par les axes de liaison aux paliers 3 du support qui, via leurs joues, se déforment pour amortir le choc subi par la plaque de patin. Cette déformation des joues élastiquement déformables entraîne un rapprochement de la plaque de patin de la base du support. Du fait de la disposition relative des différents éléments, les axes 15 de liaison tendent à se déplacer parallèlement à eux-mêmes de même que la surface active de la plaque de patin et les paliers travaillent essentiellement en compression de sorte que lors d'un choc frontal qui est le cas le plus fréquemment rencontré, la sollicitation des éléments de butoir est optimisée pour limiter l'usure de ces derniers. Dès que la plaque de patin n'est plus sollicitée en appui, la plaque de patin n'exerce plus de pression sur les paliers, en particulier les joues, élastiquement déformables du support. Les joues de paliers reviennent à leur position initiale, écartant de ce fait la plaque de patin dudit support et ramenant ladite plaque dans sa position d'origine dans laquelle elle est prête à subir un nouveau choc.

## Revendications

1. Butoir (1) amortisseur de chocs pour la protection d'un premier élément (20), tel qu'un véhicule, lors de sa rencontre avec un deuxième élément (21), tel qu'un quai, avec lequel ledit premier élément (20) à protéger est animé d'un déplacement relatif, ledit butoir comprenant au moins un support (2) apte à être fixé au premier élément (20) à protéger et un patin (8) d'interposition entre support (2) et deuxième élément (21), ledit support (2) étant réalisé au moins partiellement en un matériau élastiquement déformable pour amortir les chocs subis par la surface dite active du patin (8), en particulier lors de sa rencontre avec le deuxième élément (21), le patin (8) étant un patin de type plaque (9) dont la surface active de réception des chocs est formée par l'une (10A) des faces (10A, 10B) de ladite plaque (9), ce patin (8) présentant au moins deux zones (12) qui sont raccordées chacune au support (2) par un axe (15) de liaison et qui sont chacune formée par une partie (12) en saillie de la face (10B) de la plaque (9) de patin, dite inactive, tournée vers le support (2) et opposée à la face (10A) active de la plaque, **caractérisé en ce que** :
- chaque partie (12) en saillie comporte au moins un passage (11) d'axe apte à loger l'un des axes (15) de liaison du patin (8) au support (2),
- le support (2) comprend au moins deux paliers (3) qui servent chacun à la réception de l'un des axes (15) de liaison du patin (8) au support (2) et qui sont au moins partiellement élastiquement déformables,
- lesdits axes (15) de liaison sont disposés pour s'étendre transversalement à la direction D de déplacement de la plaque (9) de patin lorsque ladite plaque (9) de patin est soumise à un choc frontal en transmettant, par les passages (11) et les paliers (3), un effort d'appui du patin (8) vers le support (2), pour déformer les paliers (3) et amortir le choc subit par le patin (8).

2. Butoir (1) selon la revendication 1,
**caractérisé en ce que** la plaque (9) de patin est une plaque allongée de type lame et **en ce que** les axes (15) de liaison du patin (8) au support (2) sont des axes, parallèles entre eux, décalés axialement le long de la plaque (9) de patin et s'étendant sensiblement orthogonalement à l'axe longitudinal de ladite plaque.

3. Butoir (1) selon l'une des revendications 1 et 2,
**caractérisé en ce que** le support (2) est muni d'au moins une butée (19, 16) de fin de course longitudinale du patin (8), ladite butée (19, 16) limitant le déplacement dit axial du patin suivant une direction parallèle à son axe longitudinal.

4. Butoir (1) selon la revendication 3, dans lequel la plaque (9) de patin est une plaque allongée de type lame,
**caractérisé en ce que** la butée (19) limite, dans un sens, le déplacement dit axial du patin de manière à permettre, lors d'un positionnement vertical de la plaque sur le premier élément (20) à protéger, une limitation en déplacement du patin (8) suivant un mouvement ascendant.

5. Butoir (1) selon l'une des revendications 1 à 4,
**caractérisé en ce que** le support (2) comprend une base (7) portant les paliers (3) servant chacun à la réception d'un axe (15) de liaison du patin (8) au support (2), les paliers (3) étant montés amovibles sur la base (7).

6. Butoir (1) selon l'une des revendications 1 à 5,
**caractérisé en ce que** chaque partie (12) en saillie de la face (10B) inactive de la plaque (9) affecte la forme d'une dent (13) ou créneau comportant, au voisinage de son sommet, son passage (11) d'axe, la succession de dents (13) ou créneaux formant, en saillie de la face (10B) inactive de la plaque (9), une nervure ou crête crénelée ou dentelée.

7. Butoir (1) selon l'une des revendications 1 à 6,
**caractérisé en ce que** chaque palier (3) du support (2) comporte au moins deux joues (5) au moins partiellement élastiquement déformables, lesdites joues (5), munies chacune d'au moins un passage (6) d'axe, étant insérées à l'intérieur d'une chape (4) en U ou en C couché maintenant lesdites joues (5) parallèles entre elles pour délimiter, entre lesdites joues (5), un espace libre d'insertion d'une partie (12) en saillie munie d'un passage (11) d'axe du patin (8), au moins une zone de cette partie (12) en saillie du patin étant apte à venir en contact d'appui contre un flanc de la chape (4) formant butée de retenue dudit patin lors d'un déplacement axial du patin (8) suivant une direction parallèle à l'axe longitudinal de la plaque (9) de patin.

8. Butoir (1) selon la revendication 6,
**caractérisé en ce que** chaque joue (5) comporte une forme de triangle isocèle inséré par sa base dans la chape (4) et ayant ses côtés de même longueur en contact d'appui contre des parties internes du flanc de ladite chape.

9. Butoir (1) selon l'une des revendications 7 ou 8,
**caractérisé en ce que** pour chaque axe (15) de liaison, au moins l'un des passages (6, 11) d'axe du support (2) ou du patin (8) apte à recevoir ledit axe (15) de liaison est muni d'un organe mâle, ou respectivement femelle, apte à coopérer avec un organe femelle, ou respectivement mâle, ménagé sur ledit axe (15) de liaison pour une immobilisation axiale de l'axe (15) de liaison dans lesdits passages (6, 11) d'axe.

10. Butoir (1) selon l'une des revendications 3 à 9,
**caractérisé en ce qu'**il comporte, dans le prolongement de la plaque (9) de patin, la butée (16) qui est tournante et qui est reliée audit support (2) par un axe (18) porteur, ledit support (2) formant palier (17) de l'axe (18) porteur de ladite butée (16).

11. Butoir (1) selon l'une des revendications 1 à 10, dans lequel la plaque (9) de patin est une plaque allongée de type lame,
**caractérisé en ce que** la plaque (9) allongée, de type lame du patin (8), est dimensionnée pour venir à recouvrement au moins de la partie élastiquement déformable du support (2) et est recourbée à au moins une de ses extrémités en direction du support (2).

## Patentansprüche

1. Stoßdämpfender Puffer (1) zum Schutz eines ersten Elements (20), wie ein Fahrzeug, bei seinem Zusammentreffen mit einem zweiten Element (21), wie eine Rampe, zu dem sich das zu schützende erste Element (20) relativ verlagert, wobei der Puffer mindestens eine Stütze (2), die imstande ist, am zu schützenden ersten Element (20) befestigt zu sein, und einen Zwischenfuß (8) zwischen Stütze (2) und zweitem Element (21) umfasst, wobei die Stütze (2) mindestens teilweise aus einem elastisch verformbaren Material hergestellt ist, um die Stöße, die auf die aktive Fläche des Fußes (8) auftreffen, insbesondere bei seiner Begegnung mit dem zweiten Element (21), zu dämpfen, wobei der Fuß (8) ein Fuß vom Typ Platte (9) ist, deren aktive Stoßaufnahmefläche von einer (10A) der Seiten (10A, 10B) der Platte (9) gebildet wird, wobei dieser Fuß (8) mindestens zwei Zonen (12) aufweist, die jeweils mit der Stütze (2) durch eine Verbindungsachse (15) verbunden sind und die jeweils von einem Teil (12) gebildet werden, das aus der inaktiven Seite (10B) der Fußplatte (9), die zu der Stütze (2) zeigt und der aktiven Seite (10A) der Platte gegenüberliegt, herausragt, **dadurch gekennzeichnet, dass**:
- jeder herausragende Teil (12) mindestens einen Achsdurchgang (11) aufweist, der imstande ist, eine der Verbindungsachsen (15) des Fußes (8) mit der Stütze (2) aufzunehmen,
- die Stütze (2) mindestens zwei Lager (3) umfasst, die jeweils zur Aufnahme einer der Verbindungsachsen (15) des Fußes (8) mit der Stütze (2) dienen und die mindestens teilweise elastisch verformbar sind,
- die Verbindungsachsen (15) angeordnet sind, um sich quer zur Verlagerungsrichtung D der Fußplatte (9) zu erstrecken, wenn die Fußplatte (9) einem frontalen Stoß ausgesetzt ist, wobei durch die Durchgänge (11) und die Lager (3) eine Abstützkraft des Fußes (8) auf die Stütze (2) übertragen wird, um die Lager (3) zu verformen und den von dem Fuß (8) erlittenen Stoß zu dämpfen.

2. Puffer (1) nach Anspruch 1,
**dadurch gekennzeichnet, dass** die Fußplatte (9) eine längliche Platte vom Typ Lamelle ist und dass die Verbindungsachsen (15) des Fußes (8) mit der Stütze (2) zueinander parallele, entlang der Fußplatte (9) axial versetzte Achsen sind, die sich etwa orthogonal zur Längsachse der Platte erstrecken.

3. Puffer (1) nach einem der Ansprüche 1 und 2,
**dadurch gekennzeichnet, dass** die Stütze (2) mit mindestens einem länglichen Endlagenanschlag (19, 16) des Fußes (8) ausgestattet ist, wobei der Anschlag (19, 16) die axiale Verlagerung des Fußes gemäß einer Richtung parallel zu seiner Längsachse begrenzt.

4. Puffer (1) nach Anspruch 3, wobei die Fußplatte (9) eine längliche Platte vom Typ Lamelle ist,
**dadurch gekennzeichnet, dass** der Anschlag (19) in eine Richtung die axiale Verlagerung des Fußes derart begrenzt, dass bei einer vertikalen Positionierung der Platte auf dem zu schützenden ersten Element (20) eine Verlagerungsbegrenzung des Fußes (8) gemäß einer aufsteigenden Bewegung ermöglicht wird.

5. Puffer (1) nach einem der Ansprüche 1 bis 4,
**dadurch gekennzeichnet, dass** die Stütze (2) eine Basis (7) umfasst, die die Lager (3) trägt, die jeweils zur Aufnahme einer Verbindungsachse (15) des Fußes (8) mit der Stütze (2) dienen, wobei die Lager (3) lösbar auf der Basis (7) montiert sind.

6. Puffer (1) nach einem der Ansprüche 1 bis 5,
**dadurch gekennzeichnet, dass** jeder aus der inaktiven Seite (10B) der Platte (9) herausragende Teil (12) die Form eines Zahns (13) oder einer Zacke hat, der / die in der Nähe seiner / ihrer Spitze seinen Achsdurchgang (11) aufweist, wobei die Abfolge von Zähnen (13) oder Zacken, aus der inaktiven Seite (10B) der Platte (9) herausragend, eine(n) gezackte(n) oder gezahnte(n) Rippe oder Grat bildet.

7. Puffer (1) nach einem der Ansprüche 1 bis 6,
**dadurch gekennzeichnet, dass** jedes Lager (3) der Stütze (2) mindestens zwei Wangen (5) aufweist, die mindestens teilweise elastisch verformbar sind, wobei die Wangen (5), die jede mit mindestens einem Achsdurchgang (6) ausgestattet sind, in ein liegendes U- oder C-förmiges Profil (4) eingesetzt sind, das die Wangen (5) parallel zueinander hält, um zwischen den Wangen (5) einen freien Einsetzraum eines herausragenden, mit einem Achsdurchgang (11) des Fußes (8) ausgestatteten Teils (12) zu begrenzen, wobei mindestens eine Zone dieses hervorragenden Teils (12) des Fußes imstande ist, mit einer Flanke des Profils (4), die bei einer axialen Verlagerung des Fußes (8) gemäß einer Richtung parallel zur Längsachse der Fußplatte (9) einen Rückhalteanschlag des Fußes bildet, in Abstützkontakt zu kommen.

8. Puffer (1) nach Anspruch 6,
**dadurch gekennzeichnet, dass** jede Wange (5) die Form eines gleichschenkligen Dreiecks aufweist, das mit seiner Basis in das Profil (4) eingesetzt ist und dessen Seiten gleicher Länge in Abstützkontakt gegen die inneren Teile der Flanke des Profils sind.

9. Puffer (1) nach einem der Ansprüche 7 oder 8,
**dadurch gekennzeichnet, dass** für jede Verbindungsachse (15) mindestens einer der Achsdurchgänge (6, 11) der Stütze (2) oder des Fußes (8), der imstande ist, die Verbindungsachse (15) aufzunehmen, mit einem männlichen oder entsprechenden weiblichen Organ ausgestattet ist, das imstande ist, mit einem weiblichen oder entsprechenden männlichen Organ zusammenzuarbeiten, das auf der Verbindungsachse (15) für eine axiale Blockade der Verbindungsachse (15) in den Achsdurchgängen (6, 11) ausgebildet ist.

10. Puffer (1) nach einem der Ansprüche 3 bis 9,
**dadurch gekennzeichnet, dass** er in Verlängerung der Fußplatte (9) den Anschlag (16) aufweist, der drehend ist und der mit der Stütze (2) durch eine tragende Achse (18) verbunden ist, wobei die Stütze (2) für die tragende Achse (18) des Anschlags (16) ein Lager (17) bildet.

11. Puffer (1) nach einem der Ansprüche 1 bis 10, wobei die Fußplatte (9) eine längliche Platte vom Typ Lamelle ist,
**dadurch gekennzeichnet, dass** die längliche Platte (9) vom Typ Lamelle des Fußes (8) bemessen ist, um mindestens den elastisch verformbaren Teil der Stütze (2) abzudecken und an mindestens einem ihrer Ende in Richtung der Stütze (2) gekrümmt ist.

## Claims

1. A shock-absorbing stopper (1) for protecting a first element (20), such as a vehicle, when it meets a second element (21), such as a dock, with which said first element (20) to be protected is driven in relative movement, said stopper comprising at least one holder (2) capable of being fastened to the first element (20) to be protected and a skate (8) to be interposed between the holder (2) and the second element (21), said holder (2) being at least partially made from an elastically deformable material to absorb the shocks undergone by the so-called active surface of the skate (8), in particular when it meets a second element (21), the skate (8) being a skate of the plate type (9) whereof the active shock-receiving surface is formed by one (10A) of the faces (10A, 10B) of said plate (9), said skate (8) having at least two areas (12) that are each connected to the holder (2) by a hinge pin (15) and that are each formed by a part (12) protruding from the face (10B) of the skate plate (9), said to be inactive, turned toward the holder (2) and opposite the active face (10A) of the plate, **characterized in that**:
- each protruding part (12) includes at least one pin passageway (11) capable of housing one of the hinge pins (15) hinging the skate (8) to the holder (2),
- the holder (2) comprises at least two bearings (3) that each serve to receive one of the hinge pins (15) hinging the skate (8) to the holder (2) and that are at least partially elastically deformable,
- said hinge pins (15) are positioned to extend transversely to the direction D of movement of the skate plate (9) when said skate plate (9) is subjected to a frontal shock by transmitting, through the passageways (11) and the bearings (3), a bearing force from the skate (8) to the holder (2), to deform the bearings (3) and absorb the shock undergone by the skate (8).

2. The stopper (1) according to claim 1,
**characterized in that** the skate plate (9) is an elongated plate of the blade type and **in that** the hinge pins (15) hinging the skate (8) to the holder (2) are pins, parallel to each other, axially offset along the skate plate (9) and extending substantially orthogonally to the longitudinal axis of said plate.

3. The stopper (1) according to one of claims 1 and 2,
**characterized in that** the holder (2) is provided with at least one stop (19, 16) for the longitudinal end of travel of the skate (8), said stop (19, 16) limiting the so-called axial movement of the skate in a direction parallel to its longitudinal direction.

4. The stopper (1) according to claim 3, in which the skate plate (9) is an elongated plate of the blade type,
**characterized in that** the stop (19) limits, in one direction, the so-called axial movement of the skate so as to allow, during vertical positioning of the plate on the first element (20) to be protected, a limitation of the movement of the skate (8) following an upward motion.

5. The stopper (1) according to one of claims 1 to 4,
**characterized in that** the holder (2) comprises a base (7) supporting the bearings (3) each serving to receive a hinge pin (15) hinging the skate (8) to the holder (2), the bearings (3) being removably mounted on the base (7).

6. The stopper (1) according to one of claims 1 to 5,
**characterized in that** each part (12) protruding from the inactive face (10B) of the plate (9) assumes the form of a tooth (13) or indentation including, near its apex, its pin passageway (11), the series of teeth (13) or indentations forming, protruding from the inactive face (10B) of the plate (9), a crenulated or serrated rib or peak.

7. The stopper (1) according to one of claims 1 to 6,
**characterized in that** each bearing (3) of the holder (2) includes at least two flanges (5) that are at least partially elastically deformable, said flanges (5), each provided with at least one pin passageway (6), being inserted inside a U- or sideways C-shaped yoke (4) keeping said flanges (5) parallel to each other to delimit, between said flanges (5), a free space for the insertion of a protruding part (12) provided with a pin passageway (11) for the skate (8), at least one area of that protruding part (12) of the skate being capable of coming into bearing contact against a flank of the yoke (4) forming a stop for retaining said skate during an axial movement of the skate (8) in a direction parallel to the longitudinal axis of the skate plate (9).

8. The stopper (1) according to claim 6,
**characterized in that** each flange (5) includes an isosceles triangle shape inserted by its base into the yoke (4) and having its sides with the same length in bearing contact against the inner parts of the flank of said yoke.

9. The stopper (1) according to one of claims 7 or 8,
**characterized in that** for each hinge pin (15), at least one of the pin passageways (6, 11) of the holder (2) or the skate (8) capable of receiving said hinge pin (15) is provided with a male member, or female member, respectively, capable of cooperating with a female member, or male member, respectively, arranged on said hinge pin (15) for axially immobilizing the hinge pin (15) in said pin passageways (6, 11).

10. The stopper (1) according to one of claims 3 to 9,
**characterized in that** it includes, in the extension of the skate plate (9), the stop (16), which is rotated and which is connected to said holder (2) by a bearing pin (18), said holder (2) forming a bearing (17) of the bearing pin (18) of said stop (16).

11. The stopper (1) according to one of claims 1 to 10, wherein the skate plate (9) is an elongated plate of the blade type,
**characterized in that** the elongated plate (9) of the blade type of the skate (8) is dimensioned to at least partially cover the elastically deformable part of the holder (2) and is curved at least at one of its ends toward the holder (2).
